# EUROPEAN PATENT SPECIFICATION

(11) **EP 4 013 566 B1**
(45) Date of publication and mention of the grant of the patent: **22.02.2023**
(21) Application number: 20761948.7
(22) Date of filing: 12.08.2020
(51) Int. Cl.: B23K 9/173, B08B 15/04, B23K 9/29, B23K 9/32

(54) **WELDING FUME CAPTURE AND REMOVAL SYSTEM FOR ROBOTIC WELDING TORCH**
SYSTEM ZUR ABSCHEIDUNG UND ENTFERNUNG VON SCHWEISSRAUCH FÜR EINEN ROBOTISCHEN SCHWEISSBRENNER
SYSTÈME DE CAPTURE ET D'ÉLIMINATION DE FUMÉES DE SOUDAGE POUR CHALUMEAU DE SOUDAGE ROBOTISÉ

(30) Priority: 13.08.2019 US 201962885885 P
(43) Date of publication of application: 22.06.2022
(73) Proprietor: Abicor Binzel USA, Inc., Frederick, MD 21703 (US)
(72) Inventor: CENKO, Arben, Windsor, ON N8W5T3 (CA); KAYLOR, John, M., Frederick, MD 21703 (US)
(74) Representative: Weckenbrock, Matthias
(86) International application number: PCT/US2020/045861
(87) International publication number: WO 2021/030395

(56) References cited:
- JP-A- H09 267 178
- JP-A- 2000 263 236
- JP-A- 2002 096 173
- JP-U- H0 513 671
- US-A1- 2009 321 403
- US-A1- 2019 001 381

## Description

### BACKGROUND OF THE INVENTION

The present invention generally relates to a device for removing welding fumes when using a welding torch, and more particularly to a welding fume removal apparatus attached to a robotic welding torch.

A welding torch, such as a torch that may be used with the present invention, is typically used with a welding robot or any such automatic welding machine. The welding process generates harmful welding fumes that, due to safety regulations, must be removed from the surrounding environment. The fumes are typically directed to an air filtering system via a vacuum pressure machine or fume extractor. Companies developing fume extractor torches are for example Tokin Corporation, Japan, and RoboVent, USA.

According to US 2019/001 381 A1 (describing all the features of the preamble of claim 1) a fume extraction system for use with a gas shielded welding device is disclosed. The fume extraction system includes an extraction hose mounting bracket that allows the welding torch to swivel in excess of 360°. The mounting bracket has an internal flange adapted to mount about a welding torch. The bracket has a collar spaced from the internal flange that defines an interior space. A fume extraction port is in operative communication with the interior space. An intake shroud is mounted to the collar. The intake shroud is generally tubular and is open at one end. The fume extraction port, interior space and shroud create an air-path through the extraction hose mounting bracket.

JP H09 267 178 A relate to a device for sucking and removing welding fume and a method therefor. A cylindrical suction nozzle is fitted so as to cover the top part of the welding torch and formed as double tube structure.

JP H05 13671 U relate to a welding torch with a fume gas suction nozzle

According to US 2009/321 403 A1 a method for extracting fumes from a robotic welder is disclosed. The method includes controlling a robotic welder to produce a weld and extracting fumes produced by the robotic welder via a vacuum source. The method also includes selectively varying the vacuum source as a function of the position of the robotic welder.

JP 2000 263 236 A concerns a suction nozzle device for fumes, to be used for a welding torch, which is mounted compactly on the welding torch, by which the fumes can be collected.

Establishing and maintaining a safe, comfortable, and compliant work environment is necessary for compliance with regulations from agencies such as the Occupational Safety and Health Administration. In the past, manufacturers have used either large caps or ventilation hoods over the entire welding cell, or individual fume removal caps or ventilation hoods that are often too far from the welding source for effective fume capture. As such, the fumes are not fully captured, resulting in harmful gases released in the surrounding environment.

In addition to ineffective welding fume removal, overhead caps, individual caps, and the like can limit articulation of the welding robot within the workspace, as well as articulation and rotation of the robotic wrist to which the welding torch is mounted.

### SUMMARY OF THE INVENTION

In contrast, the fume capture and removal system disclosed herein is designed to fully capture fumes generated during a welding operation. Further, the fume capture and removal system can be utilized in any position that the welding torch may be oriented, including vertical, horizontal, and overhead positions. The present fume capture and removal system is mounted to the welding torch and does not interfere with the surrounding tooling during the welding process.

According to the present invention a fume capture and removal system is defined in claim 1, and includes a fume diverter, a boot assembly, and a vacuum hose assembly. The boot assembly includes a boot mount, a boot positioner, and a cylindrical boot. The vacuum hose assembly includes a quick connector, a flexible fume hose, a hose bracket, and a hose fitting to fluidly connect the fume hose, and the fume capture and removal system, to a vacuum source. When installed on the welding torch, the neck of the welding torch extends through the fume diverter and boot assembly components and an airflow path is provided therebetween to allow airflow through the fume capture and removal system.

A through-arm robotic welding torch can include endless rotation about the robot wrist, J6 axis. The fume diverter is mounttable, according to the present invention, around the welding torch such that the welding torch remains free to rotate within the fume diverter. The fume diverter is mounted to the robotic arm by a quick connector and does not rotate about the J6 axis with the welding torch.

According to the present invention, the boot positioner includes a clip and a clamp spring and configured to clamp to the neck of the welding torch. The clamp spring includes a finger that extends out from the clip and a distal end of the finger includes a hook configured to engage a notch in the boot mount. The hook the engages the notch in the lower end of the boot mount such that the boot mount is rotatably mounted to the fume diverter. The connection between the boot mount and the fume diverter is therefore rotatable so that the boot mount can be free to rotate with the welding torch neck.

The fume capture and removal system provides maximum welding fume removal due to the proximity of the fume capture boot to the welding source. The fume capture and removal system is easy to assembly and disassemble from the robotic unit, is compact, and does not interfere with the surrounding tooling during the welding process. The fume capture and removal system can be positioned in various angles related to the robotic wrist (J6 Axis), and thus can be used with substantially any type of welding robot in the industry and both rotary and non-rotary welding torches. These and other features and advantages of the invention will be more fully understood and appreciated by reference to the entire application including the specification, the claims, and the drawings.

### BRIEF DESCRIPTION OF THE DRAWINGS

- Fig. 1: is a perspective view of the fume capture and removal system mounted in a through-arm robot according to one embodiment of the present invention;
- Fig. 2: is an exploded view of the fume capture and removal system of Fig. 1;
- Fig. 3: is a perspective, partially sectioned view of the fume capture and removal system of Fig. 1, mounted to a welding torch;
- Fig. 4: is a perspective view of a fume diverter assembly of the fume capture and removal system of Fig. 1;
- Fig. 5: is an exploded view of a fume diverter assembly of the fume capture and removal system of Fig. 14
- Fig. 6: is a perspective view of a boot mount for use with the through-arm robot of Fig. 1
- Fig. 7: is a perspective, partially sectioned view of a boot mount for use with an over-arm robot of Fig. 14;
- Fig. 8: is an exploded view of the boot mount of Fig. 7;
- Fig. 9: is a perspective view of a boot positioner assembly of the fume capture and removal system of Fig. 1;
- Fig. 10: is an exploded view of the boot positioner assembly of Fig. 9;
- Fig. 11: is a sectional view of the fume capture and removal system of Fig. 1, illustrating a flow path of welding fumes from the source, directed via the fume capture and removal system to a remote vacuum source;
- Fig. 12: is a perspective view of the fume capture and removal system of Fig. 1, illustrating synchronized and independent rotation of a portion of the fume capture and removal system and welding torch with respect to a J6 axis of a robotic wrist, while other portions of the fume capture and removal system remain in a fixed position;
- Fig. 13: is a perspective view of the fume capture and removal system and welding robot, illustrating deflection of the boot when the robot collides with adjacent tooling, while still remaining affixed to the fume diverter, the boot is at least partly made from a flexible material and will deflect rather that break or shut down the robot due to the interference;
- Fig. 14: is a perspective view of the fume capture and removal system mounted to an over-arm robot, according to an example not covered by the present invention;
- Fig. 15: is a an exploded view of the fume capture and removal system of Fig. 14; and
- Fig. 16: is a perspective view of the fume capture and removal system of Fig. 14, illustrating the rotational movement with respect to a J6 axis of a robotic wrist, together with the welding.

### DESCRIPTION OF THE CURRENT EMBODIMENT

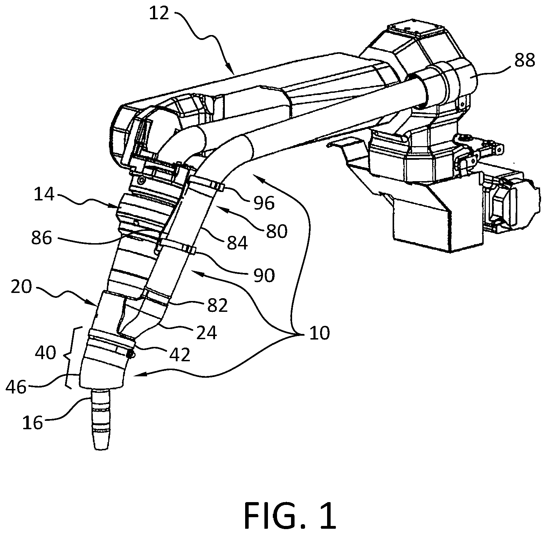

A fume capture and removal system 10 according to an embodiment of the invention is illustrated in Figs. 1-16. The fume capture and removal system 10 may be used with robotic applications and is shown mounted to a robotic arm 12 and a rotary welding torch 14 with a torch swan neck 16. The fume capture and removal system may be used with a through-arm robot, otherwise known as an internal dressing robot, or an over-arm robot, otherwise known as an offset arm robot, and can be interchangeable. The fume capture and removal system 10 provides efficient welding fume capture and removal, whether the welding torch be a tungsten inert gas ("TIG") welding torch or metal inert gas ("MIG") welding torch. During welding, the fumes are directed thru a vacuum pressure machine, otherwise called fume extraction and air filtering machines. The through-arm robotic welding torch provides for clockwise and/or counterclockwise rotation during the welding process while being continually supplied with one or more selected from inert gas, electrical current, and filler/electrode wire. The robotic welding torch may be a replaceable component that mounts to the front mounting flange of a welding robot. The robotic welding torch may be assembled at the front mounting interface of the robotic welder and then connected to the power source through a supply conduit assembly.

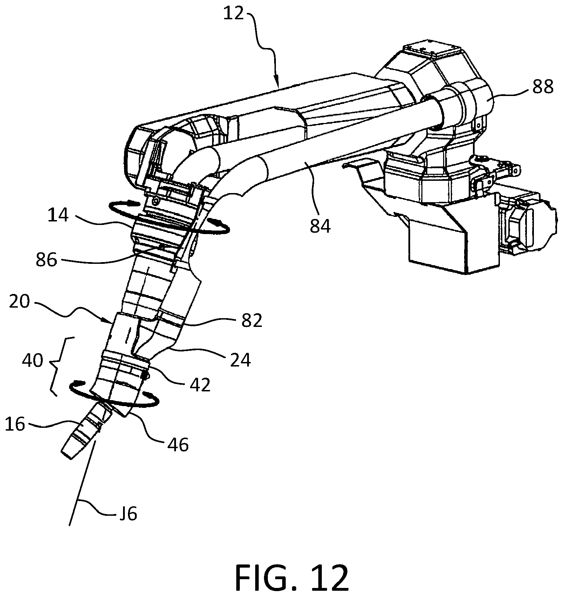

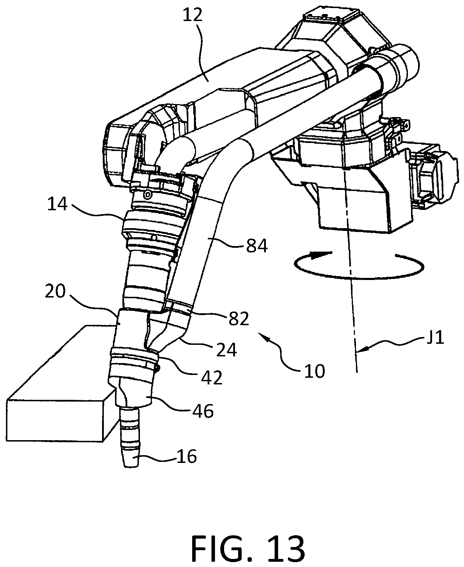

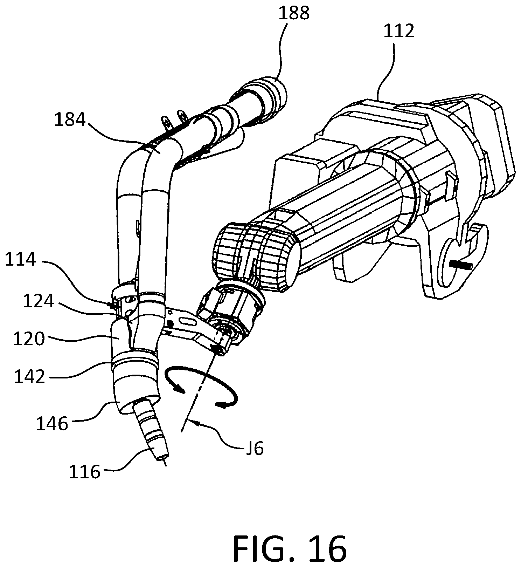

Throughout this description, directional terms, such as "upper", "lower", "inner", "outer", "front", and "rear", are used based on the orientation of the embodiment shown in the drawings. The welding robot defines a rotation axis J6, as labeled in Figs. 12 and 16 and a rotation axis J1, as labeled in Fig. 13. The use of directional terms does not limit the embodiment or the invention to any specific orientation(s).

### 1. Structure

Referring to Figs. 1-4, 6, and 9-13, the fume capture and removal system 10 is illustrated for use with a through-arm robotic welding torch, according to a first embodiment. The fume capture and removal system 10 generally includes a fume diverter 20, a boot assembly 40, and a vacuum hose assembly 80. The fume diverter 20 includes a main body portion 22 and a fume channel 24 through a sidewall of the main body portion 22. The fume diverter 20 defines an internal cavity 26 that enables fluid communication with the fume channel 24. The fume diverter 20 has an upper end 28 and a lower end 30, and the fume channel 24 defines an upper opening 25, the purposes of which will be described below. The through-arm robotic welding torch can include endless rotation about the robot wrist, J6 axis (see Fig. 12). As such, the fume diverter 20 is mounted around the welding torch 14 and the welding torch 14 remains free to rotate within the fume diverter 20. As will be described in greater detail below, the fume diverter 20 is mounted to the robotic arm 12 by a quick connector and does not rotate about the J6 axis with the welding torch 14.

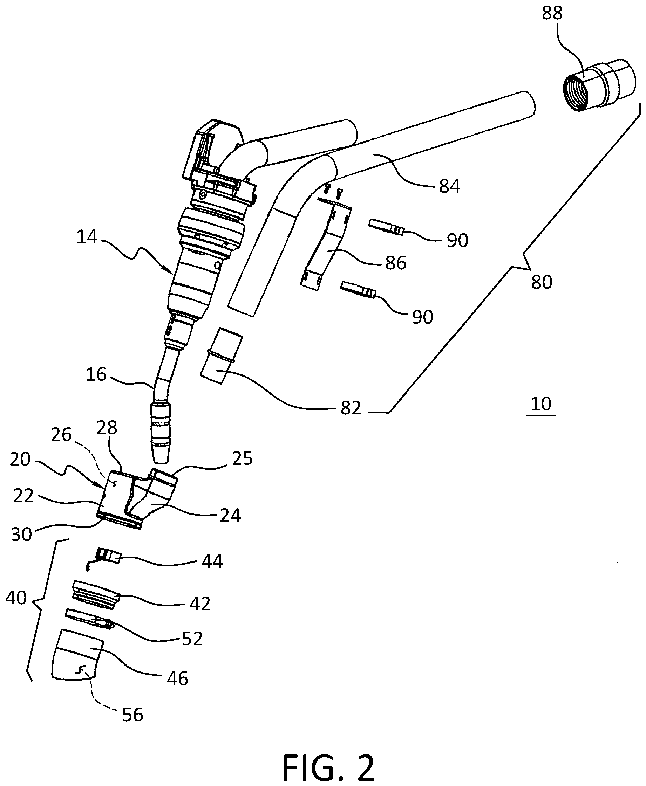

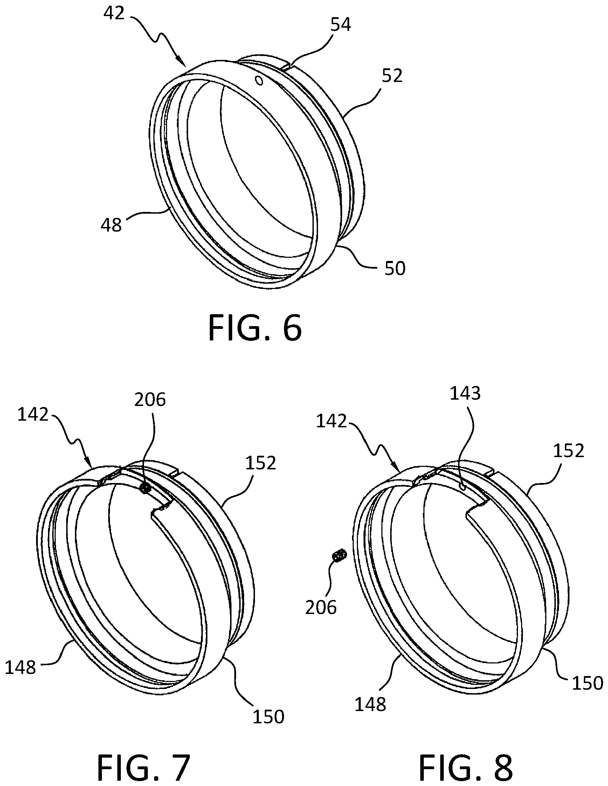

Referring to Figs. 2 and 6, the boot assembly 40 includes a boot mount 42, a boot positioner 44, and a cylindrical boot 46. The boot mount 40 includes an upper rim 48 and a cylindrical base 50 that defines a lower end 52. The lower end 52 includes a slot or notch 54 therein. The boot 46 is a generally cylindrical member and may be formed of a rubber or otherwise flexible material. The boot 46 will deflect rather that break or shut down the robot due to an interference. The boot 46 can include a slight bend to mimic the shape of the welding torch neck 16 and defines an interior 56. The boot 46 is affixed to the boot mount 42, and more specifically around the base 50, by a ring clamp 57.

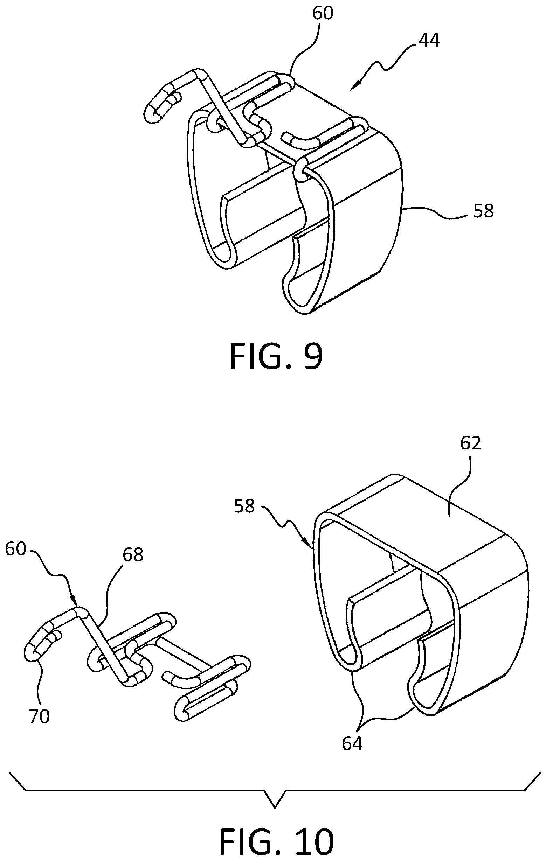

Referring to Figs. 9 and 10, the boot positioner 44 is a non-standard clamping device that includes a clip 58 and a clamp spring 60. The clip 58 includes a spring face 62 and opposed curved clip legs 64 configured to clamp to the neck 16 of the welding torch 14. The clamp spring 60 includes spring legs 66 configured to mount the clamp spring 60 to the clip spring face 62. The clamp spring 60 also includes a finger 68 that extends out from the clip 58 when assembled thereto. The distal end of the finger 68 includes a hook 70 that is configured to engage the notch 54 of the boot mount 42, the purpose of which will be described below.

Referring back to Fig. 2, the vacuum hose assembly 80 includes a quick connector 82, a flexible fume hose 84, a hose bracket 86, a hose fitting 88, and one or more fasteners, for example, ring clamps 90, hook and loop rings, zip-ties, or the like. The hose bracket 86 is an irregularly shaped member that is configured to be mounted, via standard fasteners, to a non-- rotating portion of the welding torch 14. The bracket 86 can include slots that the ring clamps 90 can extend through so as to mount the fume hose 84 to the bracket 86. The bracket 86 is shaped accordingly to generally align and secure the fume hose 84 in close relation to the welding torch 14. The quick connector 82 fluidly connects the fume hose 84 to the fume diverter 20 by insertion into the fume channel opening 25. Hose fitting 88 fluidly connects the fume hose 84 to the vacuum source (not shown).

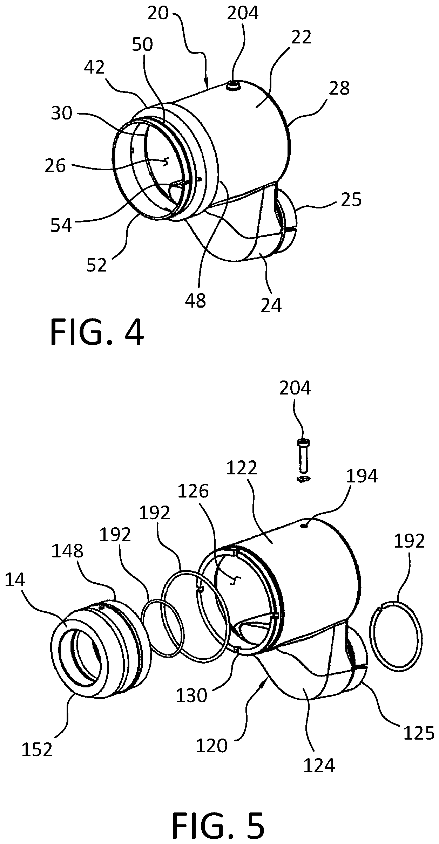

A number of seals 92 can be included to provide sealing engagement between adjoined components; for example, between the lower end 30 of the fume diverter 20 and the boot mount 42, and between the fume channel opening 25 and the quick connector 82 (see Fig. 5).

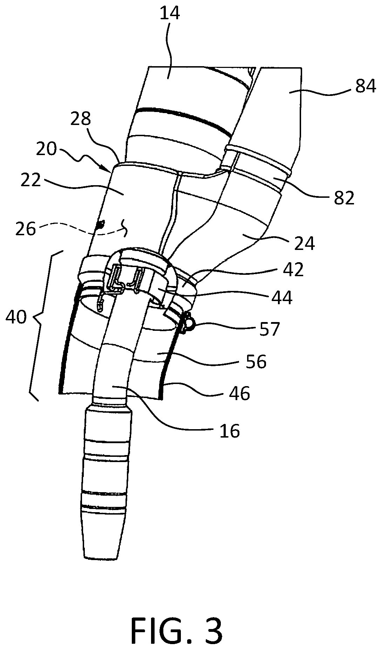

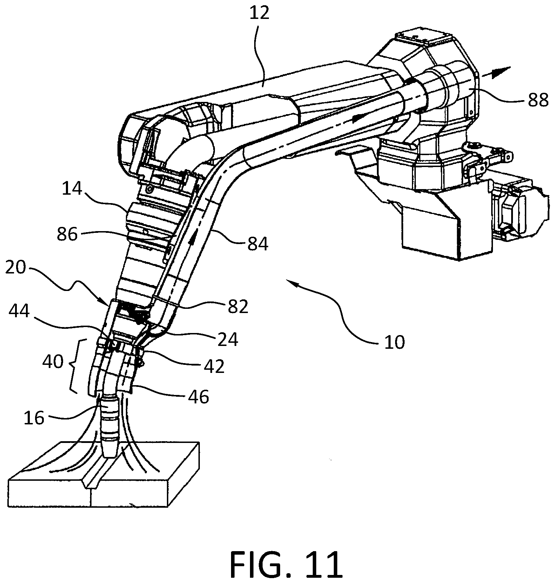

Referring to Figs. 3 and 11, when assembled to the welding torch 14, the neck 16 of the welding torch 14 extends through the fume diverter 20 and boot assembly 40 components. These components are sized to enable air intake therebetween and provide an airflow path through the fume capture and removal system 10.

### II. Operation

The fume capture and removal system 10 may be used in a robotic welding and manufacturing application and is illustrated for use with a through-arm robotic welding torch, in accordance with the first embodiment. The fume capture and removal system 10 is configured to capture, or draw in, and remove from the local area welding fumes that are generated during the welding process.

To mount the fume capture and removal system 10 to a through-arm robotic welding torch, as illustrated in Fig. 1, the hose bracket 86 is mounted to the welding torch 14 with fasteners and quick connector 82 is inserted into a lower end of the fume hose 84. Fume diverter 20 is installed over the torch neck 16 and the boot positioner 44 is clipped onto the neck 16. The boot mount 42 is installed over the torch neck 16 and aligned with the boot positioner 44 such that the hook 70 of clamp spring 60 engages the notch 54 in the lower end 52 thereof. The boot mount 42 is rotatably mounted to the fume diverter 20 by installing the upper rim 48 of the boot mount 42 to the lower end 30 of the fume diverter 20. According to the present invention, the connection between the boot mount 42 and the fume diverter 20 is rotatable such that the boot mount 42 is free to rotate relative to the fume diverter 20. The boot 46 is installed over the lower end 52 of the boot mount 42 with a ring clamp 57.

Referring to Fig. 11, the fume capture and removal system 10 is mounted to the robotic arm 12 and rotary welding torch 14 and is connected to an associated vacuum source (not shown) via the hose fitting 88. The vacuum source draws air and welding fumes through the fume capture and removal system 10. More specifically, the vacuum draws welding fumes up through the open end of the boot 46, into the internal cavity 26 of the fume diverter 20, into the fume channel 24, and through the fume hose 84.

Given the above described arrangement, the fume diverter 20 is fixed (via the quick connector 82 and hose bracket 86) relative to robotic arm 12, while the boot assembly 40 is free to rotate about the J6 axis in synchronized rotation with the welding torch neck 16. The boot positioner 44, being affixed to the rotatable welding torch 14, drives the boot assembly 40 and boot mount 42 (to which the boot positioner 44 is attached) to rotate with the welding torch neck 16. Further, being affixed to the robotic arm 12, the entire fume capture and removal system 10 is adapted to move along with the robotic arm 12. Additionally, in the case that the robotic arm 12 collides the boot 46 with a workpiece or other component, the flexibility and resiliency of the rubber boot can reduce the chance that the boot 46 will be unintentionally removed from the fume diverter 20.

### III. Structure

Referring to Figs. 5, 7-8, and 14-16, a fume capture and removal system 100 is illustrated for use with an over-arm robotic welding torch 114.

This fume capture and removal system 100 is structurally and functionally similar to the fume capture and removal system 10 of the first embodiment; accordingly, like parts will be identified with like numerals, increased by 100. The over-arm robotic welding arm 112 does not include endless rotation; the neck 116 of the welding torch 114 is fixed relative to the upper portion of the welding torch.

The fume capture and removal system 100 includes the fume diverter 120, the boot assembly 140, and the vacuum hose assembly 180. The boot assembly 140 of this example not covered by the present invention is substantially the same, less the boot positioner 44 that clamps onto the neck 116. As illustrated in Fig. 5, the fume diverter 120 includes a through hole 194 and is affixed to the welding torch 114 with a suitable fastener 204, for example a screw and washer. The lower end 130 of the fume diverter 120 can include a hole (not shown) and boot mount 142 can also include a hole 143 such that a set screw, or other suitable fastener 206, shown in Figs 7 and 8, can affix the boot mount 142 to the fume diverter 120.

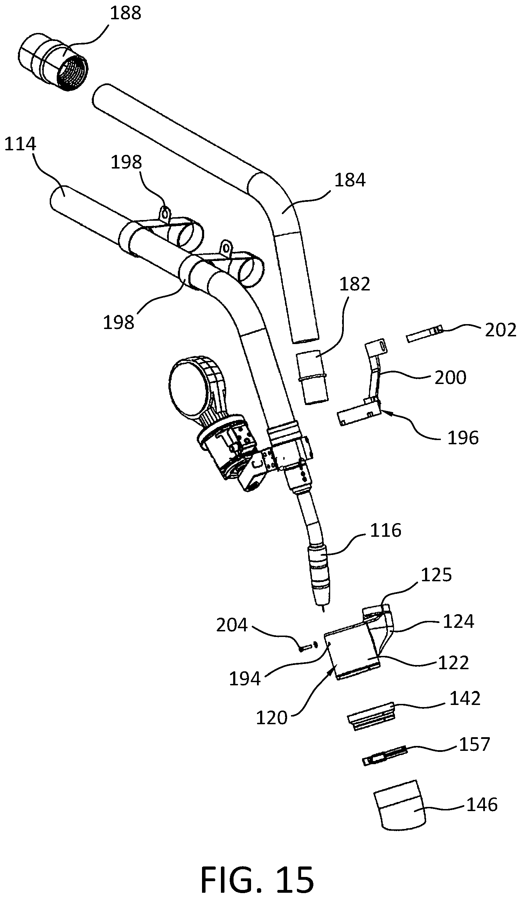

The hose assembly 180 includes the quick connector 182, fume hose 184, and hose fitting 188. Referring to Fig. 15, hose assembly 180 also includes a hose positioner 196 and one or more hose carriage brackets 198. The hose positioner 196 is mounted to the welding torch 114 and includes an arm 200 extending therefrom. The hose positioner 196 is configured to position and hold the fume hose 184 relative to the welding torch 114. A ring clamp 202, or any other suitable fastener, can secure the fume hose 184 to the arm 200 of the hose positioner 196.

The hose carriage bracket 198 is also configured to position and hold the fume hose 184 relative to the welding torch 114. The hose carriage bracket 198 is a simple bracket that connects the fume hose 184 to the welding torch 114 such that the fume hose 184 moves in synchronization with the welding torch 114, helping to keep the fume capture and removal system components 200 aligned with the robotic arm 112 and welding torch 114.

### IV. Operation

The fume capture and removal system 100 may be used in a robotic welding and manufacturing application and is illustrated for use with an over-arm robotic welding torch.

The fume capture and removal system 100 of this example not covered by the present invention is configured to capture, or draw in, and remove from the local area welding fumes that are generated during the welding process.

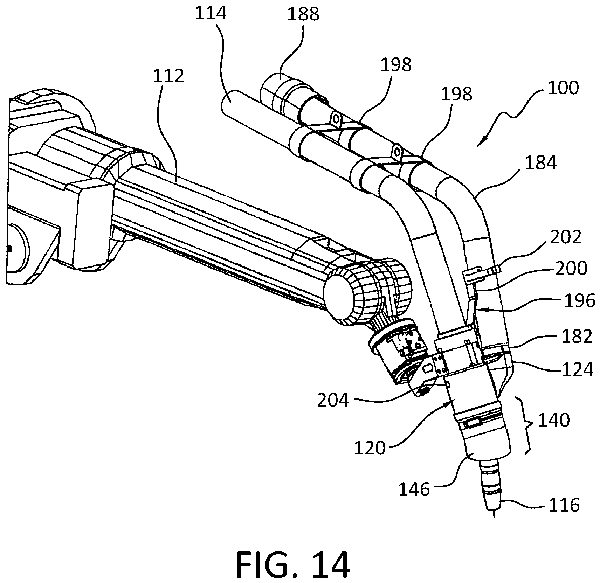

To mount the fume capture and removal system 100 to an over-arm robotic welding torch, as illustrated in Fig. 14, the fume diverter 120 can be installed over the torch neck 116 and a fastener, such as a screw or bolt, can be inserted though hole 194 to fixedly mount the fume diverter 120 to the welding torch 114. The boot mount 142 can be installed over the torch neck 116, the holes 143 in the boot mount 142 and fume diverter 120 are aligned, and a set screw can be installed to affix the components together. The boot 146 can be installed over the lower end 152 of the boot mount 142 with a ring clamp 157. The over-arm robotic welding torch does not include rotation about the robot wrist but instead rotates about a robot mounting arm J6 axis (see Fig. 16); therefore the fume diverter 120 can be affixed directly or indirectly to the welding torch itself and does not require a rotatable connection. The hose positioner 196 can be affixed to the welding torch 114 and the fume hose 184 can be affixed to the arm 200 of the hose positioner 196 with the ring clamp 202, or any other suitable fastener. The quick connector 182 is inserted into the fume channel opening 125 of the fume diverter 120. The fume hose 184 is connected to an associated vacuum source (not shown) via the hose fitting 188. The fume hose 184 can be secured to the welding torch 114 by installing one or more hose carriage brackets 198 to connect the fume hose 184 to the welding torch 114. As described above, the vacuum source draws air and welding fumes through the fume capture and removal system 100. More specifically, the vacuum draws welding fumes up through the open, lower end of the boot 146, the internal cavity 126 of the fume diverter 120, the fume channel 124, and through the fume hose 184.

It should be understood that the order of operation as described above may be reordered.

The fume capture and removal system described herein provides maximum welding fume removal due to the proximity of the fume capture boot to the welding source. The present fume capture and removal system is easy to assembly and disassemble from the robotic unit, is compact, and does not interfere with the surrounding tooling during the welding process. The fume capture and removal system can be positioned in various angles related to the robotic wrist (J6 Axis), and thus can be used with substantially any type of welding robot in the industry. Further, the fume capture and removal system can be utilized with both rotary and non-rotary welding torches. When used with a through-arm robot, the fume capture and removal system does not interfere with rotation of the torch, whether it be endless rotation or rotation within the limits of the given welding torch choice. The present disclosure offers improved safety in the robotic welding process, without performance of the welding robot.

Further advantages and improvements achieved with the present invention can be described as follows:
Ability to remove torch neck with collector and exhaust hose in place for all torches with the removable necks.

Swivel joints between suction boot ring and fume collector body to neck module interface allow the suction boot assembly to swivel with neck and collector to remain stationary relative to robot axis J6 thereby preventing hose wrapping about the 6^{th} axis and simplifying hose management. Suction ring/boot assembly is removable without tools and with exhaust hose in place.

Secure suction boot mounting ring requires no adjustment after installation and provides firm concentric positioning of the boot around the torch neck.

Exhaust hose connects to fume collection body via tapered quick connector providing a pressed fit seal. Hose clamp provided, but optional.

As compared to competitive designs the following can be noted:
Competitive designs require exhaust hose to be removed for replacing the suction boot and tools are needed therefore.

Competitive designs either use unsupported hoses or tubes, or require adjustment of the suction boot during installation.

Competitive designs may use straight connections requiring additional clamps to provide a seal.

Any reference to elements in the singular, for example, using the articles "a," "an," "the," or "said," is not to be construed as limiting the element to the singular.

The above description is that of a current embodiment of the invention. Various alterations and changes can be made without departing from the scope of the present invention as defined in the appended claims.

### References

- 10: removal system
- 12: robotic arm
- 14: welding torch
- 16: torch neck
- 20: fume diverter
- 22: main body portion
- 24: fume channel
- 25: upper opening
- 26: internal cavity
- 28: upper end
- 30: lower end
- 40: boot assembly
- 42: boot mount
- 44: boot positioner
- 46: boot
- 48: upper rim
- 50: cylindrical base
- 52: lower end
- 54: notch
- 56: interior
- 57: ring clamp
- 58: clip
- 60: clamp spring
- 62: spring face
- 64: clip leg
- 66: spring leg
- 68: finger
- 70: hook
- 80: vacuum hose assembly
- 82: quick connector
- 84: fume hose
- 86: hose bracket
- 88: hose fitting
- 90: ring clamp
- 92: seal
- 100: removal system
- 112: robotic welding arm
- 114: welding torch
- 116: neck
- 120: fume diverter
- 130: lower end
- 120: fume diverter
- 124: fume channel
- 125: channel opening
- 126: internal cavity
- 130: lower end
- 140: boot assembly
- 142: boot mount
- 143: hole
- 146: boot
- 152: lower end
- 157: ring clamp
- 180: hose assembly
- 182: quick connector
- 184: fume hose
- 188: hose fitting
- 194: through hole
- 196: hose positioner
- 198: carriage brackets
- 200: arm
- 202: ring clamp
- 204: fastener
- 206: fastener

- J1: axis
- J6: axis

## Claims

1. A fume capture and removal system (10) for capturing and removing welding fumes generated when mounted to a welding torch (14, 114), comprising
(a) a fume diverter (20),
(b) a boot assembly (40), and
(c) a vacuum hose assembly (80), **characterized in that** the boot assembly (40) comprises a boot mount (42), a boot positioner (44) and a boot (46) and that the boot positioner (44) is a clamping device comprising a clip (58) and a clamp spring (60), wherein the connection between the boot mount (42) and the fume diverter (20) is rotatable such that the boot mount (42) is free to rotate relative to the fume diverter (20), and whereby, in use, the fume diverter (20) is installed over the torch neck ( 16) and, in use, the boot positioner (44) is clipped onto the neck (16) of the welding torch (14).

2. The fume capture and removal system (10) according to claim 1,
**characterized in that** the system (10) can be mounted to a robotic welding torch (14).

3. The fume capture and removal system (10) according to claim 1 or 2, **characterized in that** the fume diverter (20) comprises a main body portion (22), a fume channel (24) extending through a sidewall of the main body portion (22) and an internal cavity (26) enabling fluid communication with the fume channel (24).

4. The fume capture and removal system (10) according to one of claims 1 - 3, **characterized in that**, in use, that the fume diverter (20) is mounted around the welding torch (14) and the welding torch (14) remains free to rotate within the fume diverter (20).

5. The fume capture and removal system (10) according to claim 4, **characterized in that**, in use, the fume capture and removal system (10) is mounted to the robotic arm (12) by a quick connector and does not rotate about the J6 axis with the welding torch (14).

6. The fume capture and removal system (10) according to claim 1, **characterized in that** the boot (46) is formed of rubber or otherwise flexible material.

7. The fume capture and removal system (10) according to claim 1, **characterized in that** the boot (46) is a cylindrical member formed of rubber or otherwise flexible material and is affixed to the boot mount (42).

8. The fume capture and removal system (10) according to one of claims 1 - 5 and 6-7, **characterized in that** the vacuum hose assembly (80) comprises a quick connector (82), a flexible fume hose (84), a hose bracket (86) and a hose fitting (88) and one or more fasteners.

9. The fume capture and removal system (10) according to claim 8, **characterized in that**, in use, the hose bracket (86) is mounted to a nonrotating portion of the welding torch (14).

10. The fume capture and removal system (10) according to one of claims 1 - 9, **characterized in that**, in use, the neck (16) of the welding torch (14) extends through the fume diverter (20) and the boot assembly (40) and an airflow path is provided therebetween allowing airflow through the fume capture and removal system (10).

11. The fume capture and removal system (10) according to one of claims 2 - 10, in combination with an automatic welding machine, **characterized in that** a through-arm (12) robotic welding torch (14) shows endless rotation about the robot wrist J6 axis.

12. Welding process employing a robotic welding torch (14) or an automatic welding machine, **characterized in that** the robotic welding torch or the automatic welding machine is equipped with a fume capture and removal system (10) according to one of claims 1 - 11.

13. The use of a fume capture and removal system (10) according to one of claims 1 - 11 in a welding process.

## Patentansprüche

1. Raucherfassungs- und -abführsystem (10) zum Erfassen und Abführen von erzeugtem Schweißrauch, wenn es an einem Schweißbrenner (14, 114) montiert ist, umfassend:
(a) eine Rauchumlenkvorrichtung (20),
(b) eine Manschettenanordnung (40), und
(c) eine Vakuumschlauchanordnung (80),
**dadurch gekennzeichnet, dass** die Manschettenanordnung (40) eine Manschettenhalterung (42), eine Manschettenpositioniervorrichtung (44) und eine Manschette (46) umfasst und dass die Manschettenpositioniervorrichtung (44) eine Klammervorrichtung ist, die eine Klemme (58) und eine Klammerfeder (60) umfasst, wobei die Verbindung zwischen der Manschettenhalterung (42) und der Rauchumlenkvorrichtung (20) derart drehbar ist, dass sich die Manschettenhalterung (42) in Relation zu der Rauchumlenkvorrichtung (20) frei drehen kann, und wobei in Verwendung die Rauchumlenkvorrichtung (20) über dem Brennerhals (16) installiert ist und in Verwendung die Manschettenpositioniervorrichtung (44) an den Hals (16) des Schweißbrenners (14) geklemmt ist.

2. Raucherfassungs- und -abführsystem (10) nach Anspruch 1, **dadurch gekennzeichnet, dass** das System (10) an einen Roboterschweißbrenner (14) montiert werden kann.

3. Raucherfassungs- und -abführsystem (10) nach Anspruch 1 oder 2, **dadurch gekennzeichnet, dass** die Rauchumlenkvorrichtung (20) einen Hauptkörperabschnitt (22), einen sich durch eine Seitenwand des Hauptkörperabschnitts (22) erstreckenden Rauchkanal (24) und einen inneren Hohlraum (26), der eine Fluidverbindung mit dem Rauchkanal (24) ermöglicht, umfasst.

4. Raucherfassungs- und -abführsystem (10) nach einem der Ansprüche 1-3, **dadurch gekennzeichnet, dass** in Verwendung die Rauchumlenkvorrichtung (20) um den Schweißbrenner (14) montiert ist und sich der Schweißbrenner (14) weiterhin in der Rauchumlenkvorrichtung (20) frei drehen kann.

5. Raucherfassungs- und -abführsystem (10) nach Anspruch 4, **dadurch gekennzeichnet, dass** in Verwendung das Raucherfassungs- und - abführsystem (10) an dem Roboterarm (12) durch einen Schnellverbinder montiert ist und sich nicht mit dem Schweißbrenner (14) um die J6-Achse dreht.

6. Raucherfassungs- und -abführsystem (10) nach Anspruch 1, **dadurch gekennzeichnet, dass** die Manschette (46) aus Gummi oder einem anderweitig flexiblen Material ausgebildet ist.

7. Raucherfassungs- und -abführsystem (10) nach Anspruch 1, **dadurch gekennzeichnet, dass** die Manschette (46) ein zylindrisches Element ist, das aus Gummi oder einem anderweitig flexiblen Material ausgebildet ist und an der Manschettenhalterung (42) fixiert ist.

8. Raucherfassungs- und -abführsystem (10) nach einem der Ansprüche 1-5 und 6-7, **dadurch gekennzeichnet, dass** die Vakuumschlauchanordnung (80) einen Schnellverbinder (82), einen flexiblen Rauchschlauch (84), einen Schlauchhalter (86) und eine Schlauchverbindung (88) und ein oder mehrere Befestigungselemente umfasst.

9. Raucherfassungs- und -abführsystem (10) nach Anspruch 8, **dadurch gekennzeichnet, dass** in Verwendung der Schlauchhalter (86) an einem sich nicht drehenden Abschnitt des Schweißbrenners (14) montiert ist.

10. Raucherfassungs- und -abführsystem (10) nach einem der Ansprüche 1-9, **dadurch gekennzeichnet, dass** sich in Verwendung der Hals (16) des Schweißbrenners (14) durch die Rauchumlenkvorrichtung (20) und die Manschettenanordnung (40) erstreckt und ein Luftströmungsweg dazwischen bereitgestellt ist, der eine Luftströmung durch das Raucherfassungs- und -abführsystem (10) ermöglicht.

11. Raucherfassungs- und -abführsystem (10) nach einem der Ansprüche 2-10 in Kombination mit einem Schweißautomat, **dadurch gekennzeichnet, dass** ein Roboterschweißbrenner (14) mit Armdurchführung (12) eine Endlosdrehung um die Roboterhandgelenks-J6-Achse aufzeigt.

12. Schweißprozess, der einen Roboterschweißbrenner (14) oder einen Schweißautomat einsetzt, **dadurch gekennzeichnet, dass** der Roboterschweißbrenner oder der Schweißautomat mit einem Raucherfassungs- und -abführsystem (10) nach einem der Ansprüche 1-11 ausgestattet ist.

13. Verwendung eines Raucherfassungs- und -abführsystems (10) nach einem der Ansprüche 1-11 in einem Schweißprozess.

## Revendications

1. Système de capture et d'élimination de fumées (10) destiné à capturer et éliminer les fumées de soudage générées lorsqu'il est monté sur un chalumeau de soudage (14, 114), comprenant
(a) un déflecteur de fumées (20),
(b) un ensemble soufflet (40), et
(c) un ensemble tuyau à vide (80),
**caractérisé en ce que** l'ensemble soufflet comprend un support de soufflet (42), un positionneur de soufflet (44) et un soufflet (46) et **en ce que** le positionneur de soufflet (44) est un dispositif de serrage comprenant une pince (58) et un ressort de serrage (60), la liaison entre le support de soufflet (42) et le déflecteur de fumées (20) étant rotative de sorte que le support de soufflet (42) soit libre de tourner par rapport au déflecteur de fumées (20), et moyennant quoi, lors de l'utilisation, le déflecteur de fumées (20) est installé sur le col de chalumeau (16) et, lors de l'utilisation, le positionneur de soufflet (44) est clipsé sur le col (16) du chalumeau de soudage (14).

2. Système de capture et d'élimination de fumées (10) selon la revendication 1, **caractérisé en ce que** le système (10) peut être monté sur un chalumeau de soudage robotisé (14).

3. Système de capture et d'élimination de fumées (10) selon la revendication 1 ou 2, **caractérisé en ce que** le déflecteur de fumées (20) comprend une partie corps principal (22), un canal de fumées (24) s'étendant à travers une paroi latérale de la partie corps principal (22) et une cavité interne (26) permettant une communication fluidique avec le canal de fumées (24).

4. Système de capture et d'élimination de fumées (10) selon l'une des revendications 1 à 3, **caractérisé en ce que**, lors de l'utilisation, le déflecteur de fumées (20) est monté autour du chalumeau de soudage (14) et le chalumeau de soudage (14) reste libre de tourner à l'intérieur du déflecteur de fumées (20).

5. Système de capture et d'élimination de fumées (10) selon la revendication 4, **caractérisé en ce que**, lors de l'utilisation, le système de capture et d'élimination de fumées (10) est monté sur le bras robotique (12) par un raccord rapide et ne tourne pas autour de l'axe J6 avec le chalumeau de soudage (14).

6. Système de capture et d'élimination de fumées (10) selon la revendication 1, **caractérisé en ce que** le soufflet (46) est formé de caoutchouc ou d'un autre matériau flexible.

7. Système de capture et d'élimination de fumées (10) selon la revendication 1, **caractérisé en ce que** le soufflet (46) est un élément cylindrique formé de caoutchouc ou d'un autre matériau flexible et est fixé au support de soufflet (42).

8. Système de capture et d'élimination de fumées (10) selon l'une des revendications 1 à 5 et 6 à 7, **caractérisé en ce que** l'ensemble tuyau à vide (80) comprend un raccord rapide (82), un tuyau de fumées flexible (84), un support de tuyau (86) et un raccord de tuyau (88) et une ou plusieurs fixations.

9. Système de capture et d'élimination de fumées (10) selon la revendication 8, **caractérisé en ce que**, lors de l'utilisation, le support de tuyau (86) est monté sur une partie non rotative du chalumeau de soudage (14).

10. Système de capture et d'élimination de fumées (10) selon l'une des revendications 1 à 9, **caractérisé en ce que**, lors de l'utilisation, le col (16) du chalumeau de soudage (14) s'étend à travers le déflecteur de fumées (20) et l'ensemble soufflet (40) et un chemin d'écoulement d'air est prévu entre eux, permettant un écoulement d'air à travers le système de capture et d'élimination de fumées (10).

11. Système de capture et d'élimination de fumées (10) selon l'une des revendications 2 à 10, en combinaison avec une machine de soudage automatique, **caractérisé en ce qu'**un chalumeau de soudage robotisé (14) à bras traversant (12) présente une rotation sans fin autour de l'axe J6 du poignet du robot.

12. Procédé de soudage mettant en oeuvre un chalumeau de soudage robotisé (14) ou une machine de soudage automatique, **caractérisé en ce que** le chalumeau de soudage robotisé ou la machine de soudage automatique est équipé d'un système de capture et d'évacuation de fumées (10) selon l'une des revendications 1 à 11.

13. Utilisation d'un système de capture et d'élimination de fumées (10) selon l'une des revendications 1 à 11 dans un procédé de soudage.
